(19) Europäisches Patentamt
European Patent Office
Office européen des brevets

(11) **EP 3 241 637 B1**

(12) **EUROPEAN PATENT SPECIFICATION**

(45) Date of publication and mention
of the grant of the patent:
**22.12.2021 Bulletin 2021/51**

(51) Int Cl.:
**B23B 25/02** *(2006.01)*        **B23G 1/02** *(2006.01)*

(21) Application number: **16382192.9**

(22) Date of filing: **03.05.2016**

(54) **THREADING METHOD AND MACHINE**

EINFÄDELUNGSVERFAHREN UND -MASCHINE

PROCÉDÉ DE FILETAGE ET MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.11.2017 Bulletin 2017/45**

(73) Proprietors:
• **Danobat, S. Coop.**
**20870 Elgoibar Guipuzcoa (ES)**
• **Ideko, S.Coop.**
**20870 Elgoibar Guipuzcoa (ES)**

(72) Inventors:
• **BEDIAGA, Iñigo**
**20870 Elgoibar, Guipúzcoa (ES)**
• **BEUDAERT, Xavier**
**20870 Elgoibar, Guipúzcoa (ES)**
• **NAVARRO, Alberto**
**20870 Elgoibar, Guipúzcoa (ES)**

(74) Representative: **Balder IP Law, S.L.**
**Paseo de la Castellana 93**
**5ª planta**
**28046 Madrid (ES)**

(56) References cited:
EP-A2- 0 371 450        WO-A1-2016/056526
US-A- 4 599 769        US-A1- 2015 273 642

• BERGLIND, L.; ZIEGERT, J.: "Modulated Tool Path (MTP) Machining for Threading Applications", PROCEDIA MANUFACTURING, vol. 1, 2015, pages 546-555, XP002762957,
• Worldmach: "Okuma LC 30 CNC Lathe", , XP002762958, Retrieved from the Internet: URL:http://www.worldmach.com/metal-process ing-machinry/okuma-lc-30-cnc-lathe-okuma-l c-30.html [retrieved on 2016-10-14]
• DATABASE WPI Week 201613 Thomson Scientific, London, GB; AN 2016-10142C XP002762959, -& JP 5 851670 B1 (CITIZEN HOLDINGS CO LTD) 3 February 2016 (2016-02-03)
• DATABASE WPI Week 201582 Thomson Scientific, London, GB; AN 2015-78208R XP002762960, -& JP 5 826444 B1 (MITSUBISHI ELECTRIC CORP) 2 December 2015 (2015-12-02)

**Description**

**TECHNICAL FIELD**

This invention belongs to the field of methods for threading operations, especially methods for threading tubes and more especially for threading oil and gas tubes.

**STATE OF THE ART**

Conventional turning and threading machines usually produce long chip strips when material is removed by the cutting tool. This chip can be accumulated and may interfere with the normal operation of the cutting tool or other elements of the machine. The longer the turning operation, the more serious the problems related to chip production.
Several methods have been developed to try to avoid or at least minimize this problem.
However, these methods require the use of complex and expensive tool geometries, and they are not usually suitable for being used with a wide range of threading patterns.
Document US 2009/107308 A1 discloses a method for chip breaking by superimposing an oscillation in the feed direction on the toolpath. However, this method is not suitable for being used in threading, as the oscillation of the cutting tool as described may interfere with the final thread profile of the workpiece.
Document "Modulated Tool Path (MTP) Machining for Threading Applications", by Berglind, L. and Ziegert, J. (Procedia Manufacturing, Volume 1, 2015, Pages 546-555, ISSN: 2351-9789) acknowledges the incompatibility arisen by the preceding document and discloses a method with the features of the preamble of independent claim 1, which tries to apply this knowledge to threading operations. In this case, the cutting tool performs an oscillatory movement in the direction of the infeed angle used to machine the thread. As such, this method can be used to machine undercut threads.
Document EP 0371450 A2 discloses an automatic lathe for machining a blank material. The automatic lathe has two headstocks that are slidably carried along a bed such that the blank material is subject to front machining and rear machining.
Document US 4599769 A discloses a machine tool with a rotating cutting tool that may be radially positioned with accuracy and rotatable at high speed without noticeable vibration.
Document US 2015/273642 A1 discloses a chip discharging device of a machine tool. The device includes a chip discharging member for discharging chips generated by machine processing to a workpiece to an outside of the machine tool, and a chip shooter for introducing the chips to the chip discharging member.
Document WO 2016/056526 A1 discloses a machine tool capable of preventing a long, continuous chip from getting entangled with a workpiece or a cutting tool when a threading work is performed on the workpiece.
Documents JP 5851670 B1 and JP 5826444 B1 disclose numerical control apparatuses including a thread-cutting vibration for thread cutting a workpiece with cutting tools.
It is the object of the invention to provide a versatile method of threading, which is especially suitable for premium threads, in which the length of the chips can be controlled.

DESCRIPTION OF THE INVENTION

This problem is solved by a method for threading according to claim 1.
Preferred embodiments of the invention are defined in dependent claims.
The invention provides a method of threading a workpiece by means of a threading machine comprising a cutting tool, wherein the workpiece and the cutting tool have a relative movement between them which comprises

a rotation component in the spin direction or spindle direction,
a feeding linear component and an oscillatory component in the feed direction;
a cutting linear component and an oscillatory component in the cutting direction, such that chip produced has a length lower than a predetermined value,
wherein in the threading operation
the cutting tool performs a thread in the workpiece, the thread comprising a leading angle and a trailing angle; and
the cutting tool works at a radial depth of cut.

The thread comprises a leading face and a trailing face. The leading face forms a leading angle with respect to the rotation axis and the trailing face forms a trailing angle with respect to the rotation axis.
The spindle direction should be understood as usual in this technical field: it is the direction of the angular velocity of the workpiece around its rotation axis with respect to the cutting tool.

As in any other relative movement, the invention is related both to the cases where the workpiece rotates and where the cutting tool rotates. Whatever the subject of rotation be, this movement is necessary for turning and threading operations, as the interposition of the cutting tool in this movement produces the removal of material in these operations.

The feed direction should also be understood as usual in this technical field: the feed direction is the direction defined by the rotation axis of the workpiece. Regarding the feeding linear component, it is not relevant whether the workpiece advances in this feed direction or is the cutting tool which moves in this feed direction in the opposite sense; the relevant feature is that the relative movement between the workpiece and the cutting tool comprises a feeding linear component in the feed direction, which represents the advancing movement of the workpiece with respect of the cutting tool. Further, the movement also comprises an oscillatory component in this feed direction, which may be assumed either by the workpiece or by the cutting tool.

The cutting direction should be understood as the deepening or advancing direction of the cutting tool into the workpiece. The cutting direction forms a cutting angle with respect to the rotation axis of the workpiece. The position of the cutting tool along the cutting direction therefore represents the "depth position" of the cutting tool. When the cutting tool moves along the cutting direction, it is coming nearer or further the rotation axis of the workpiece. Once again, regarding the cutting linear component, it is not relevant whether the workpiece moves in this cutting direction or is the cutting tool which moves in this cutting direction in the opposite sense; the relevant feature is that the relative movement between the workpiece and the cutting tool comprises a component in the cutting direction, although this component usually corresponds to the movement performed by the cutting tool. Further, the movement also comprises an oscillatory component in this cutting direction, which may be assumed either by the workpiece or by the cutting tool.

An oscillatory movement should be interpreted in the broad sense, not only a sinusoidal wave, but also any alternative movement which runs between a lower point and an upper point. As this oscillatory movement is mechanically caused, and not naturally induced, this broad sense further involves that when an element is said to move in an oscillatory movement, it is meant to move "at least" in such oscillatory movement, since moving further away from the workpiece would cause the same effect of separating the piece and thus cutting the chip production.

In a particular embodiment, the workpiece moves with a rotation component in the spindle direction and an oscillatory component in the feed direction and the cutting tool moves with an oscillatory component in the cutting direction. In a different particular embodiment, the workpiece moves with a rotation component in the spindle direction and the cutting tool moves with an oscillatory component in the feed direction and with an oscillatory component in the cutting direction. In a different particular embodiment, the cutting tool moves with a rotation component in the spindle direction, with an oscillatory component in the feed direction and with an oscillatory component in the cutting direction. In a different particular embodiment, the workpiece moves with a rotation component in the spindle direction, with an oscillatory component in the feed direction and with an oscillatory component in the cutting direction.

In the method of the invention, the oscillatory component in the cutting direction comprises

an initially programmed movement $Pos_{init}X(t)$, which corresponds to the cutting linear component; and
an oscillation component $IncX(t)$, with a programmed radial depth of cut $a_{pr}$, a safety factor $k$, an oscillation frequency $f$, and a phase shift $\varphi$ given by the expression:

$$IncX(t) = \frac{a_{pr}}{2} \cdot k \cdot \sin(2 * \pi * f * t + \varphi)$$

wherein

$a_{pr}$     is comprised between 0 and 2mm and preferably comprised between 0 and 1mm;
$k$     is comprised between 0.5 and 1.5;
$f$     is set depending on the chip length predetermined value.

In the method of the invention, the oscillatory movement in the feed direction comprises

an initially programmed movement $Pos_{init}Z(t)$, which corresponds to the feeding linear component; and
an oscillation component $IncZ(t)$, which corresponds to the oscillation component in the cutting direction, given by

$$IncZ(t) = \tan(\beta_{prog}) \cdot IncX(t)$$

wherein $\beta_{prog}$ is the programmed thread angle, which shows the interaction between the movements in the cutting and feeding directions, and it is comprised between 0 and the sum of the leading angle and the trailing angle. In a particular embodiment, this programmed thread angle is comprised between 0 and the greater of the leading angle and the trailing angle. In a particular embodiment, this programmed thread angle is comprised between the leading angle and the trailing angle.

In a particular embodiment, the method for threading comprises more than one tool pass, and wherein in the last tool pass *IncZ*(*t*) = *IncX*(*t*) = **0**.

In a particular embodiment, the phase shift between two consecutive tool passes is substantially equal to 180º.

In a particular embodiment, the cutting tool comprises multiple teeth.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figures 1a and 1b show two workpieces with different external threads to be used in the threading method according to the invention.
Figures 2a and 2b show two workpieces with different internal threads to be used in the threading method according to the invention.
Figures 3 to 6 shows graphics illustrating the position of a cutting tool in a method according to the invention.
Figures 7a-7d show a threading machine according to the invention.

## DESCRIPTION OF A WAY OF CARRYING OUT THE INVENTION

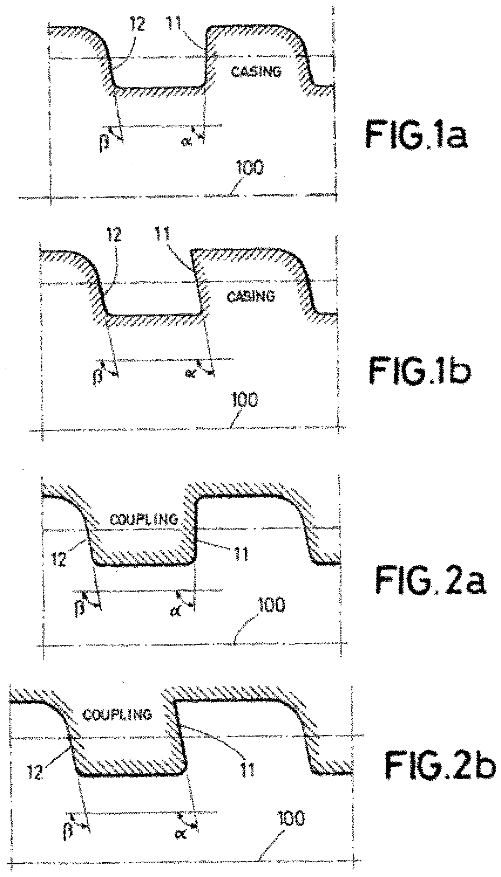

Figures 1a and 1b show two different workpieces which have an external thread, also called tubing or casings, to illustrate the difference between a standard profile, for example the API (American Petroleum Institute) profile, which is represented in Figure 1a, and a non-standard profile, also called Premium profile, which is represented in Figure 1b. In these figures, a rotation axis (100) and a longitudinal section of a workpiece (1) intended to rotate with respect to the rotation axis (100) with a spindle direction are shown.

The following elements may be defined in said workpieces (1):

a leading face (11), forming a leading angle ($\alpha$) with respect to the rotation axis (100), in the counter clockwise direction; and
a trailing face (12), forming a trailing angle ($\beta$) with respect to the rotation axis (100), in the counter clockwise direction.

Figure 1a shows an API external thread, while Figure 1b shows a Premium external thread.

With the aim of defining these types of threads, a virtual leading angle ($\alpha$') and a virtual trailing angle ($\beta$') are defined:

$$\alpha' = \alpha - \frac{\pi}{2}$$

$$\beta' = \beta - \frac{\pi}{2}$$

As shown in the figures, in API external threads, since $\alpha'$ < **0** and $\beta'$ > **0**, the result $\alpha' \cdot \beta'$ < 0 in all cases for API threads, while in Premium external threads, since $\alpha'$ > 0 and $\beta'$ > 0, the result $\alpha' \cdot \beta'$ > **0** in all cases for Premium threads.

Figures 2a and 2b show two different workpieces which have an internal thread, also called couplings. Figure 2a shows an API internal thread, while Figure 2b shows a Premium internal thread.

As shown in the figures, in API internal threads, since $\alpha'$ < **0** and $\beta'$ > **0**, the result $\alpha' \cdot \beta'$ < 0

in all cases for API threads, while in Premium internal Z threads, since $\alpha'$ > 0 and $\beta'$ > 0, the result $\alpha' \cdot \beta'$ > 0 in all cases for Premium threads.

The method of the invention is suitable for obtaining threading profiles, such as the ones shown in

Figure 1a, 1b, 2a and 2b.

The workpiece and the cutting tool have a relative movement between them which comprises a rotation component in the spindle direction, an oscillatory component in the feed direction and an oscillatory component in the cutting direction, such that chip produced has a length lower than a predetermined value.

In a particular embodiment, this relative movement is achieved in the following way: the workpiece moves with a rotation component in the spindle direction. The rotation component in the spindle direction is caused by the rotation of the turning lathe, where the workpiece is solidly attached. The tool is moved with an oscillatory movement in the cutting direction (usually called X axis) and an oscillatory component in the feed direction (usually called Z axis). However, in different embodiments, each one of the rotary and oscillatory movements is assumed either by the tool or the workpiece.

Considering a sinusoidal oscillation, the oscillatory movement in this embodiment is defined by the following equations:

$$PosX(t) = Pos_{init}X(t) + IncX(t)$$

$$PosZ(t) = PosZ_{init}(t) + IncZ(t)$$

$$IncX(t) = \frac{a_{pr}}{2} \cdot k \cdot \sin(2 * \pi * f * t + \varphi)$$

$$IncZ(t) = \tan(\beta_{prog}) \cdot IncX(t)$$

wherein

$t$ is time;

$Pos_{init}X(t)$ is the initially programmed movement of the workpiece in the X axis, corresponding to the cutting operation without the oscillation performed for a better chip control;

$Pos_{init}Z(t)$ is the initially programmed movement of the workpiece in the Z axis, corresponding to the cutting operation without the oscillation performed for a better chip control;

$PosX(t)$ is the movement of the workpiece in the X axis comprising the oscillatory movement;

$PosZ(t)$ is the movement of the workpiece in the Z axis comprising the oscillatory movement;

$IncX(t)$ corresponds to the oscillatory movement in X axis;

$IncZ(t)$ corresponds to the oscillatory movement in Z axis;

$\alpha_{pr}$ is the programmed radial depth of cut, typically comprised between 0 and 2mm and preferably comprised between 0 and 1mm;

$k$ is a safety factor comprised between 0.5 and 1.5;

$f$ is the oscillation frequency comprised between 1Hz and 25Hz; preferably comprised between 1Hz and 10Hz;

$\varphi$ is the phase shift which is comprised between n/2 (90°) and 3π/2 (270°); and

$\beta_{prog}$ is the programmed thread angle, and it is comprised between 0 and the sum of the leading angle ($\alpha$) and the trailing angle ($\beta$). In a particular embodiment, this programmed thread angle $\beta_{prog}$ is comprised between 0 and the greater of the leading angle ($\alpha$) and the trailing angle ($\beta$). In a particular embodiment, this programmed thread angle $\beta_{prog}$ is comprised between the leading angle ($\alpha$) and the trailing angle ($\beta$).

When a method not within the scope of the claims is used with API threads, $\beta_{prog}$ = 0. This angle gives the oscillation direction followed by the combined movement of the workpiece (or the cutting tool, depending on the particular embodiment) in X and Z axes.

These equations are appropriately converted into a language which is acceptable for a CNC machine, for example, a velocity command may be superimposed instead of a position command.

The frequency $f$ is chosen depending on the desired value for the chip length $L$:

$$f = \frac{N * \pi}{60} \cdot \frac{1}{L} \cdot D$$

$N$ being the spindle speed in rpm and $D$ being the workpiece diameter.

The consequence of a movement comprising these two oscillatory components is that the cutting tool does not remove any material from the workpiece that is part of the final shape of the threading profile.

The complete threading operation comprises several passes of the cutting tool. As the material remaining in the workpiece has a shape affected by the oscillatory components of the relative movement, the different passes must have a phase difference, for the cutting tool not to repeat the trajectory in each pass. Further, the relative movement between the cutting tool and the workpiece in the last pass must not comprise any oscillatory components, as the final surface may not be affected by the shape obtained by the abovementioned oscillatory components. The cutting tool may comprise one single tooth or multiple teeth. In the case there is only one single tooth, the optimum phase difference between consecutive passes is $\pi$ (180º). When multiple teeth are used, the programmed radial depth of cut $\alpha_{pr}$ is much higher, where the whole depth is shared between the different teeth. Hence, the chip may be broken with less oscillation values, as the value of $IncX(t)$ is proportional to the value of $\alpha_{pr}$ and the phase difference may be different.

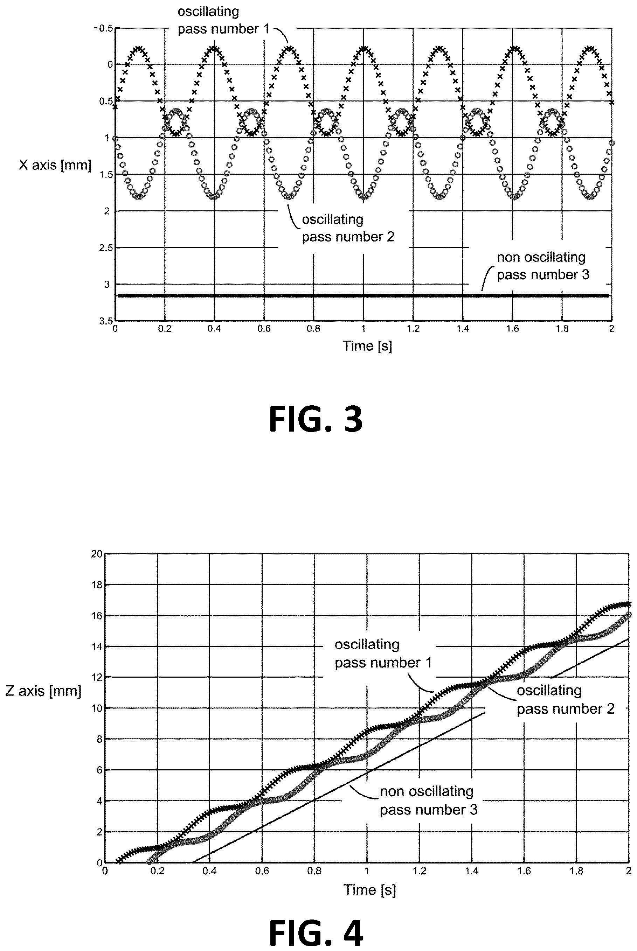

Figure 3 shows a graphic which presents the position of the cutting tool in the cutting direction against time for the different passes of a threading operation, when using a tool with a single tooth.

In this graphic it may be observed only three passes, for the sake of clarity. The first pass is shown using cross markers, the second pass is shown using circle markers and the third pass is shown in a continuous line. As it may be seen in this figure, the first and second oscillation waves have a phase difference of substantially 180º. When the trajectory of a subsequent pass (in this case the second pass) is below the trajectory of a previous pass, material of the workpiece is being removed and thus a chip is formed. When the trajectory of a subsequent pass is above the trajectory of a previous pass, the removal of material of the workpiece is being interrupted and thus the chip is cut. The length of a particular chip will be proportional to the distance between two cuttings in the trajectories of one pass and the subsequent pass: the one where the trajectory of the subsequent pass becomes lower than the trajectory of the preceding pass and the one where the trajectory of the subsequent pass becomes higher than the trajectory of the preceding pass. As the X axis of this graphic is represented in seconds, the length of the piece of chip in metres will be calculated multiplying this magnitude by the linear velocity of the cutting tool with respect of the workpiece.

The third pass (which represents the last pass in a cutting operation) has no oscillation component, as indicated above, as the final surface finishing of the piece must comply with tolerance requirements, and therefore must be smooth.

Figure 4 shows a graphic which presents the position of the cutting tool in the feed direction against time for the different passes of the aforementioned threading operation. The printing criteria are the same as in Figure 3.

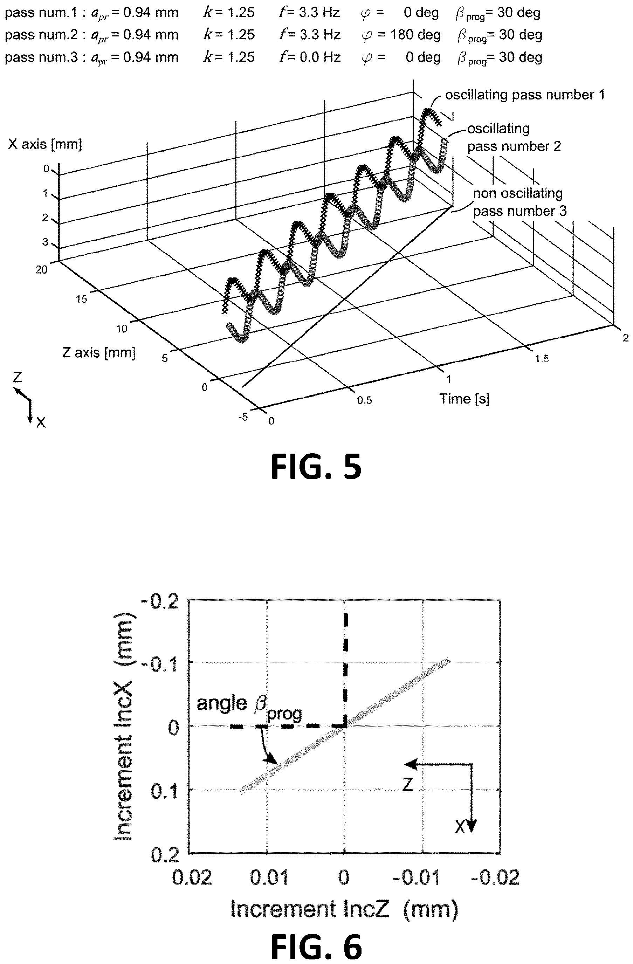

Figure 5 shows a tri-dimensional graphic which presents the position of the cutting tool in the cutting direction and in the feed direction against time for the different passes of the aforementioned threading operation. The printing criteria are the same as in Figures 3 and 4, and allow a better understanding of the movement in view of the previous figures.

Figure 6 shows a graphic with represents the relation between the values of $IncX(t)$ and $IncZ(t)$, along the whole cutting operation. As these values are pure oscillations, the relation between them is a straight line that forms an angle $\beta_{prog}$ with respect to the vertical axis.

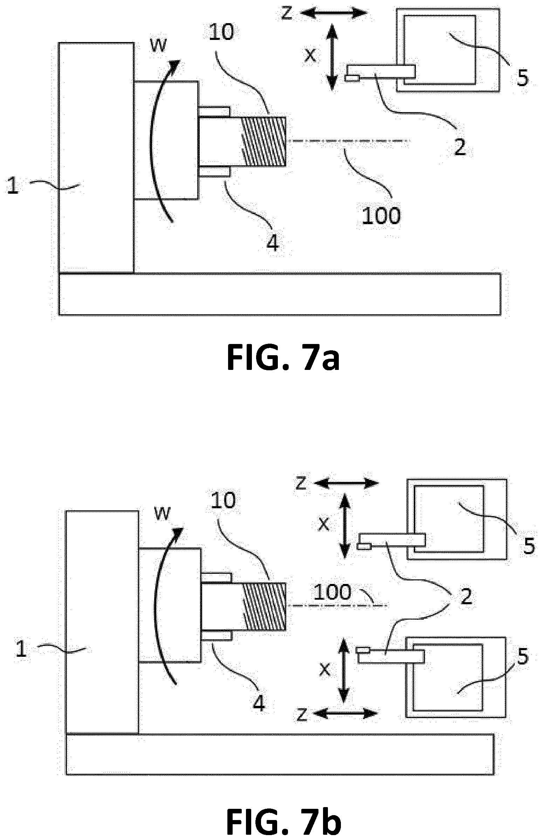

Figures 7a to 7d shows an overview of a machine for threading (1), which is suitable for performing a method as described above.

As can be seen in this figure, this threading machine (1) comprises

a cutting tool (2);
retaining means (4), for retaining the workpiece (10) during the threading operation; and
control means (5), for controlling the movement of the cutting tool (2) and the movement of the retaining means (4).

In this case, the retaining means (4) are a 4-jaw chuck, which retains the workpiece (10) during the threading operations.

Control means (5) are adapted for moving the chuck (4) and the cutting tool (2). The relative movement is achieved by moving the chuck (4) with a rotation component in the spindle direction (W). The cutting tool (2) is moved with an oscillatory component in the feed direction (Z) and in the cutting direction (X). This combination is shown in figures 7a and 7b. Figure 7a shows a cutting tool with a single tooth. However, in other embodiments, the tool comprises multiple teeth. Figure 7b, in turn, shows a configuration with multiple tools.

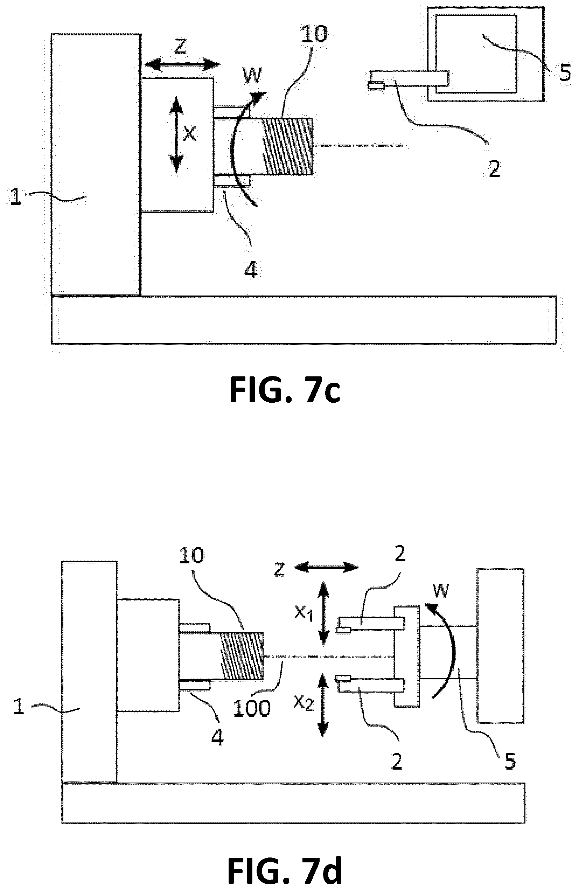

Another way of achieving this relative movement is by moving the chuck (4) with a rotation component in the spindle direction (W) and further with an oscillatory component in the feed direction (Z) and in the cutting direction (X). This combination is shown in figure 7c, with a cutting tool with a single tooth or multiple teeth, although this movement may be performed also by multiple tools.

A different way of achieving this relative movement is by moving the cutting tool (2) with a rotation component in the spindle direction (W) and further with an oscillatory component in the feed direction (Z) and in the cutting direction (X). This combination is shown in figure 7d, with multiple cutting tools.

The parameters of this movement are calculated in the method described above, and they are calculated depending on the desired length of the chip produced.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of materials, dimensions, components, configuration, etc.), within the scope of the invention as defined in the claims.

**Claims**

1.  Method of threading a workpiece (10) by means of a threading machine (1) comprising a cutting tool (2), wherein the workpiece (10) and the cutting tool (2) have a relative movement between them which comprises

    a rotation component in the spin direction or spindle direction (W),
    a feeding linear component and an oscillatory component in the feed direction (Z);
    a cutting linear component and an oscillatory component in the cutting direction (X), such that chip produced has a length lower than a predetermined value, wherein in the threading operation
    the cutting tool (2) produces a thread in the workpiece (10), the thread comprising a leading angle ($\alpha$) and a trailing angle ($\beta$); and
    the cutting tool (2) works at a radial depth of cut;

    **charaterised in that**

    the oscillatory component in the cutting direction comprises an initially programmed movement $Pos_{init}X(t)$, which corresponds to the cutting linear component; and
    an oscillation component $IncX(t)$, with a programmed radial depth of cut $a_{pr}$, a safety factor $k$, an oscillation frequency $f$, and a phase shift $\varphi$ given by the expression:

    $$IncX(t) = \frac{a_{pr}}{2} \cdot k \cdot \sin(2 * \pi * f * t + \varphi)$$

    wherein

    $\alpha_{pr}$, is comprised between 0 and 2mm and preferably comprised between 0 and 1mm;
    $k$ is comprised between 0.5 and 1.5; and
    $f$ is set depending on the chip length predetermined value;
    wherein the oscillatory movement in the feed direction comprises
    an initially programmed movement $Pos_{init}Z(t)$, which corresponds to the feeding linear component; and
    an oscillation component $IncZ(t)$, which corresponds to the oscillation component in the cutting direction, given by

    $$IncZ(t) = \tan(\beta_{prog}) \cdot IncX(t)$$

    wherein $\beta_{prog}$ is the programmed thread angle, and it is comprised between 0 and the sum of the leading angle ($\alpha$) and the trailing angle ($\beta$).

2.  Method of threading according to claim 1, wherein the workpiece (10) moves with a rotation component in the spindle direction (W) and an oscillatory component in the feed direction (Z) and the cutting tool moves with an oscillatory component in the cutting direction (X).

3.  Method of threading according to claim 1, wherein the workpiece (10) moves with a rotation component in the spindle direction (W) and the cutting tool moves with an oscillatory component in the feed direction (Z) and with an oscillatory component in the cutting direction (Z).

4.  Method of threading according to claim 1, wherein the cutting tool moves with a rotation component in the spindle direction (W), with an oscillatory component in the feed direction (Z) and with an oscillatory component in the cutting direction (X).

5. Method of threading according to claim 1, wherein the workpiece (10) moves with a rotation component in the spindle direction (W), with an oscillatory component in the feed direction (Z) and with an oscillatory component in the cutting direction (X).

6. Method of threading according to any of the preceding claims, wherein the programmed thread angle $\beta_{prog}$ is comprised between 0 and the greater of the leading angle ($\alpha$) and the trailing angle ($\beta$).

7. Method of threading according to any of claims 1-5, wherein the programmed thread angle $\beta_{prog}$ is comprised between the leading angle ($\alpha$) and the trailing angle ($\beta$).

8. Method for threading according to any of the preceding claims, comprising more than one tool pass, and wherein in the last tool pass $IncZ(t) = IncX(t) = 0$.

9. Method for threading according to any of the preceding claims, wherein the phase shift ($\varphi$) between two consecutive tool passes is substantially equal to 180º.

10. Method for threading according to any of the preceding claims, wherein the cutting tool comprises multiple teeth.

**Patentansprüche**

1. Verfahren zum Gewindeschneiden eines Werkstücks (10) mittels einer Gewindeschneidmaschine (1) umfassend ein Schneidwerkzeug (2), wobei das Werkstück (10) und das Schneidwerkzeug (2) eine Relativbewegung zwischen sich aufweisen, die umfasst:

eine Rotationskomponente in Drehrichtung oder Spindelrichtung (W),
eine lineare Zuführkomponente und eine oszillierende Komponente in Zuführrichtung (Z);
eine schneidende lineare Komponente und eine oszillierende Komponente in Schnittrichtung (X),
so dass der erzeugte Chip eine Länge hat, die kleiner als ein vorbestimmter Wert ist, wobei im Gewindevorgang das Schneidwerkzeug (2) ein Gewinde im Werkstück (10) erzeugt, wobei das Gewinde einen Vorlaufwinkel ($\alpha$) und einen Nachlaufwinkel ($\beta$) umfasst; und
das Schneidwerkzeug (2) mit einer radialen Schnitttiefe arbeitet;

**dadurch gekennzeichnet, dass**

die oszillierende Komponente in Schnittrichtung umfasst
eine anfänglich programmierte Bewegung $Pos_{init}X(t)$ die der linearen Schneidkomponente entspricht; und
eine Oszillierungskomponente $IncX(t)$ mit einer programmierten radialen Schnitttiefe $\alpha_{pr}$, einem Sicherheits-faktor $k$, einer Oszillierungsfrequenz $f$ und einer Phasenverschiebung $\varphi$ gegeben durch den Ausdruck:

$$IncX(t) = \frac{a_{pr}}{2} \cdot k \cdot \sin(2 * \pi * f * t + \varphi)$$

wobei

$\alpha_{pr}$ zwischen 0 und 2 mm und vorzugsweise zwischen 0 und 1 mm liegt;
$k$ zwischen 0,5 und 1,5 liegt; und
$f$ in Abhängigkeit von dem vorbestimmten Wert der Chiplänge eingestellt wird;
wobei die oszillierende Bewegung in Zuführrichtung umfasst
eine anfänglich programmierte Bewegung $Pos_{init}Z(t)$, die der zuführenden linearen Komponente entspricht; und
eine Oszillierungskomponente $IncZ(t)$, die der eine Oszillierungskomponente in Schnittrichtung entspricht, ge-geben durch

$$IncZ(t) = \tan(\beta_{prog}) \cdot IncX(t)$$

wobei $\beta_{prog}$ der programmierte Gewindewinkel ist und zwischen 0 und der Summe des Vorlaufwinkels ($\alpha$) und des Nachlaufwinkels ($\beta$) liegt.

2. Verfahren zum Gewindeschneiden nach Anspruch 1, wobei sich das Werkstück (10) mit einer Rotationskomponente in Spindelrichtung (W) und einer oszillierenden Komponente in Zuführrichtung (Z) bewegt und sich das Schneidwerkzeug mit einer oszillierenden Komponente in die Schnittrichtung (X) bewegt.

3. Verfahren zum Gewindeschneiden nach Anspruch 1, wobei sich das Werkstück (10) mit einer Rotationskomponente in Spindelrichtung (W) bewegt und sich das Schneidwerkzeug mit einer oszillierenden Komponente in die Zuführrichtung (Z) und mit einer oszillierenden Komponente in die Schnittrichtung (Z) bewegt.

4. Verfahren zum Gewindeschneiden nach Anspruch 1, wobei sich das Schneidwerkzeug mit einer Rotationskomponente in Spindelrichtung (W), mit einer oszillierenden Komponente in Zuführrichtung (Z) und mit einer oszillierenden Komponente in Schneidrichtung (X) bewegt.

5. Verfahren zum Gewindeschneiden nach Anspruch 1, **dadurch gekennzeichnet, dass** sich das Werkstück (10) mit einer Rotationskomponente in Spindelrichtung (W), mit einer oszillierenden Komponente in Zuführrichtung (Z) und mit einer oszillierenden Komponente in Schnittrichtung (X) bewegt.

6. Verfahren zum Gewindeschneiden nach irgendeinem der vorangehenden Ansprüche, wobei der der programmierte Gewindewinkel $\beta_{prog}$ zwischen 0 und dem größeren des Vorlaufwinkels ($\alpha$) und des Nachlaufwinkels ($\beta$) liegt.

7. Verfahren zum Gewindeschneiden nach irgendeinem der Ansprüche 1 bis 5, wobei der programmierte Gewindewinkel $\beta_{prog}$ zwischen dem Vorlaufwinkel ($\alpha$) und dem Nachlaufwinkel ($\beta$) liegt.

8. Verfahren zum Gewindeschneiden nach irgendeinem der vorangehenden Ansprüche, das mehr als einen Werkzeugdurchgang umfasst, und wobei im letzten Werkzeugdurchgang *IncZ(t) = IncX(t)* = 0 ist.

9. Verfahren zum Gewindeschneiden nach irgendeinem der vorangehenden Ansprüche, wobei die Phasenverschiebung ($\varphi$) zwischen zwei aufeinanderfolgenden Werkzeugdurchgängen im Wesentlichen gleich 180° ist.

10. Verfahren zum Gewindeschneiden nach irgendeinem der vorhergehenden Ansprüche, wobei das Schneidwerkzeug mehrere Zähne umfasst.

## Revendications

1. Procédé de filetage d'une pièce (10) au moyen d'une machine à fileter (1) comprenant un outil de coupe (2), dans lequel la pièce (10) et l'outil de coupe (2) ont un mouvement relatif entre eux qui comprend

   une composante de rotation dans la direction de la rotation ou la direction de la broche (W),
   une composante linéaire d'avancement et une composante oscillante dans la direction de l'avancement (Z) ;
   une composante linéaire de coupe et une composante oscillante dans la direction de coupe (X),
   de sorte qu'un copeau produit a une longueur inférieure à une valeur prédéterminée, procédé dans lequel, durant l'opération de filetage,
   l'outil de coupe (2) produit un filet dans la pièce (10), le filet comprenant un angle d'attaque ($\alpha$) et un angle de fuite ($\beta$) ; et
   l'outil de coupe (2) travaille à une profondeur de coupe radiale ;
   **caractérisé en ce que** la composante oscillante dans la direction de coupe comprend
   un mouvement initialement programmé **$Pos_{init}X(t)$** qui correspond à la composante linéaire de coupe ; et
   une composante oscillante **$IncX(t)$**, avec une profondeur de coupe radiale programmée **$a_{pr}$**, un facteur de sécurité **k**, une fréquence d'oscillation **f**, et un déphasage $\varphi$, laquelle est donnée par l'expression :

$$IncX(t) = \frac{a_{pr}}{2} \cdot k \cdot \sin(2 * \pi * f * t + \varphi)$$

dans laquelle

$a_{pr}$ est compris entre 0 et 2 mm, et de préférence compris entre 0 et 1 mm ;

$k$ est compris entre 0,5 et 1,5 ; et

$f$ est réglé en fonction de la valeur prédéterminée de la longueur du copeau ;

le mouvement oscillant dans la direction d'avancement comprend

un mouvement initialement programmé $Pos_{init}Z(t)$, qui correspond à la composante linéaire d'avancement ; et une composante oscillante $IncZ(t)$, qui correspond à la composante oscillante dans la direction de coupe, laquelle est donnée par

$$IncZ(t) = tan(\beta_{prog}) \cdot IncX(t)$$

où $\beta_{prog}$ est l'angle de filetage programmé, et il est compris entre 0 et la somme de l'angle d'attaque ($\alpha$) et de l'angle de fuite ($\beta$).

2. Procédé de filetage selon la revendication 1, dans lequel la pièce (10) se déplace avec une composante de rotation dans la direction de la broche (W) et une composante oscillante dans la direction d'avancement (Z), et l'outil de coupe se déplace avec une composante oscillante dans la direction de coupe (X).

3. Procédé de filetage selon la revendication 1, dans lequel la pièce (10) se déplace avec une composante de rotation dans la direction de la broche (W), et l'outil de coupe se déplace avec une composante oscillante dans la direction d'avancement (Z) et avec une composante oscillante dans la direction de coupe (Z).

4. Procédé de filetage selon la revendication 1, dans lequel l'outil de coupe se déplace avec une composante de rotation dans la direction de la broche (W), avec une composante oscillante dans la direction d'avancement (Z) et avec une composante oscillante dans la direction de coupe (X).

5. Procédé de filetage selon la revendication 1, dans lequel la pièce (10) se déplace avec une composante de rotation dans la direction de la broche (W), avec une composante oscillante dans la direction d'avancement (Z) et avec une composante oscillante dans la direction de coupe (X).

6. Procédé de filetage selon l'une quelconque des revendications précédentes, dans lequel l'angle de filetage programmé $\beta_{prog}$ est compris entre 0 et le plus grand entre l'angle d'attaque ($\alpha$) et l'angle de fuite ($\beta$).

7. Procédé de filetage selon l'une quelconque des revendications 1 à 5, dans lequel l'angle de filetage programmé $\beta_{prog}$ est compris entre l'angle d'attaque ($\alpha$) et l'angle de fuite ($\beta$).

8. Procédé de filetage selon l'une quelconque des revendications précédentes, comprenant plus d'un passage d'outil, et dans lequel lors du dernier passage d'outil $IncZ(t) = IncX(t) = 0$.

9. Procédé de filetage selon l'une quelconque des revendications précédentes, dans lequel le déphasage ($\varphi$) entre deux passages d'outils consécutifs est sensiblement égal à 180°.

10. Procédé de filetage selon l'une quelconque des revendications précédentes, dans lequel l'outil de coupe comprend de multiples dents.

FIG.1a

FIG.1b

FIG.2a

FIG.2b

**FIG. 3**

**FIG. 4**

pass num.1 : $a_{pr}$ = 0.94 mm    $k$ = 1.25    $f$ = 3.3 Hz    $\varphi$ = 0 deg    $\beta_{prog}$ = 30 deg

pass num.2 : $a_{pr}$ = 0.94 mm    $k$ = 1.25    $f$ = 3.3 Hz    $\varphi$ = 180 deg    $\beta_{prog}$ = 30 deg

pass num.3 : $a_{pr}$ = 0.94 mm    $k$ = 1.25    $f$ = 0.0 Hz    $\varphi$ = 0 deg    $\beta_{prog}$ = 30 deg

**FIG. 5**

**FIG. 6**

**FIG. 7a**

**FIG. 7b**

**FIG. 7c**

**FIG. 7d**

**EP 3 241 637 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009107308 A1
- EP 0371450 A2
- US 4599769 A
- US 2015273642 A1

- WO 2016056526 A1
- JP 5851670 B
- JP 5826444 B

**Non-patent literature cited in the description**

- **BERGLIND, L ; ZIEGERT, J.** Modulated Tool Path (MTP) Machining for Threading Applications. *Procedia Manufacturing,* 2015, vol. 1, ISSN 2351-9789, 546-555